# EUROPÄISCHE PATENTSCHRIFT

(11) **EP 2 142 889 B1**
(45) Veröffentlichungstag und Bekanntmachung des Hinweises auf die Patenterteilung: **11.02.2015**
(21) Anmeldenummer: 08716681.5
(22) Anmeldetag: 22.03.2008
(51) Int. Cl.: G01D 5/14

(54) **SENSORANORDNUNG MIT GESCHLOSSENEM MAGNET UND HALLSENSOR IN DER NEUTRALZONE DES MAGNETEN**
SENSOR ARRAY COMPRISING A CLOSED MAGNET AND A HALL SENSOR IN THE NEUTRAL ZONE OF THE MAGNET
ENSEMBLE DÉTECTEUR DOTÉ D'UN AIMANT FERMÉ ET D'UN CAPTEUR À EFFET HALL DANS LA ZONE NEUTRE DE L'AIMANT

(30) Priorität: 03.05.2007 DE 102007021084
(43) Veröffentlichungstag der Anmeldung: 13.01.2010
(73) Patentinhaber: Hirschmann Automotive GmbH, 6830 Rankweil-Brederis (AT)
(72) Erfinder: MOOSMANN, Alexander, A-6850 Dornbirn (AT); DENGLER, Werner, 6714 Nüziders (AT)
(74) Vertreter: Greif, Thomas
(86) Internationale Anmeldenummer: PCT/EP2008/002324
(87) Internationale Veröffentlichungsnummer: WO 2008/135118

(56) Entgegenhaltungen:
- EP-A- 0 718 494
- US-A- 6 043 646

## Beschreibung

Die Erfindung betrifft eine Sensoranordnung zur Messung linearer oder rotatorischer Bewegungen eines Bauteiles, wobei die Sensoranordnung einen Magneten sowie ein magnetosensitves Element aufweist, und das magnetosensitive Element in einem magnetflussfreien Bereich des Magneten angeordnet ist, gemäß den Merkmalen des Oberbegriffes des Patentsanspruches 1.

Aus dem Stand der Technik, der zum Beispiel in der EP 0 778 954 B1 oder EP 1 477 772 A1 dokumentiert ist, sind Sensoranordnungen zur Messung linearer oder rotatorischer Bewegungen einen Bauteiles bekannt. Bei diesen bekannten Sensoranordnungen ist ein U-förmiger Magnet sowie ein magnetosensitive Element vorhanden, wobei das magnetosensitive Element in einem magnetflussfreien Bereich des Magneten zwischen dessen beiden Schenkeln angeordnet ist. Wenn ein Auslöseteil aus einem ferromagnetischen Werkstoff relativ zu dem magnetosensitiven Element bewegt wird, erzeugt dieses ein Ausgangssignal, welches ein Maß für die relative Lage des Bauteils zu einem bestimmten Bezugspunk darstellt.

Der Aufbau und die Wirkungsweise dieser bekannten Sensoranordnungen sind robust, haben sich in der Praxis bewährt und liefern zur Erfassung der Bewegung des Bauteils (Auslöseteil) zufrieden stellende Signale, die ein Maß dafür darstellen, welcher Weise sich das Bauteil linear oder rotatorisch bewegt hat. Allerdings haben die bekannten Sensoranordnungen den Nachteil, dass sie auch bei einer gewissen Miniaturisierung einen hohen Bauraum aufweisen. Dies liegt daran, dass das magnetosensitive Element zwischen den beiden nach oben abstehenden Schenkeln des U-förmigen Magneten angeordnet ist und damit auch auf Distanz zu dem Querschenkel zwischen den beiden nach oben abstehenden Schenkeln des U-förmigen Magneten liegen muss, damit es im magnetflussfreien Bereich angeordnet wird. Damit addieren sich die Höhe des Querschenkels des U-förmigen Magnete und die Bauhöhe des magnetosensitiven Elementes einschließlich des dazwischen erforderlichen Bauraumes in nachteiliger Weise zu einer Bauhöhe, die gerade dann von Nachteil ist, wenn die gesamten Sensoranordnung miniaturisiert werden soll und am Einbauort nur eine beschränkte Bauhöhe zur Verfügung steht.

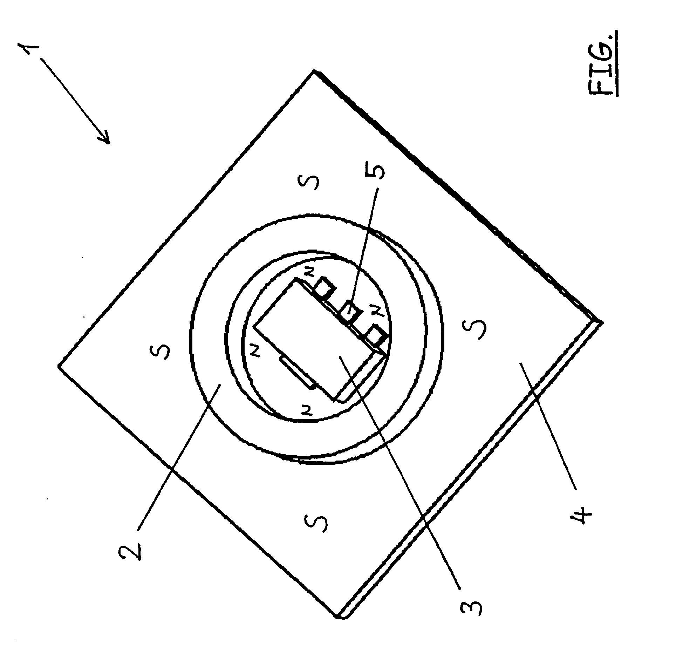

Ein weiterer Nachteil besteht darin, dass die Magnetflusslinien zwischen dem Nordpol und dem Südpol des Magneten einen bestimmten Verlauf aufweisen, der nur eine bestimmte relative Bewegung zwischen dem Auslöseteil und dem magnetosensitiven Element zulässt. Diese Bewegungsrichtung ist derart eingeschränkt, dass das Auslöseteil nur auf einer geraden bewegt werden kann, die gedanklich durch die beiden nach oben weisenden Schenkel des U-förmigen Magneten verläuft. Gleiches gilt bei der Erfassung von rotatorischen Bewegungen, bei denen ein flächiges Auslöseteil rotatorisch bewegt wird. Dabei muss dieses flächige Auslöseteil immer senkrecht in einer Ebene angeordnet sein, wobei diese Ebene durch den Querschnitt des Magneten verläuft. Diesbezüglich wird z.B. auf die einzige Figur der EP 0 778 954 B1 (bezüglich linearer Bewegungen) bzw. der Figur 1 der EP 1 477 772 A1 (bezüglich rotatorischer Bewegungen des Auslöseteils) verwiesen.

Der Erfindung liegt daher die Aufgabe zu Grunde, eine Sensoranordnung zur Messung linearer oder rotatorischer Bewegungen eines Bauteils bereit zu stellen, mit der die eingangs geschilderten Nachteiles des Standes der Technik vermieden werden. Insbesondere soll bei klein bauenden Sensoranordnungen die Bauhöhe der Sensoranordnung verringert werden und es zusätzlich ermöglich werden, dass die relative Bewegung eines Auslöseteiles der Sensoranordnung in Bezug auf das magnetosensitive Element größere Freiheiten zulässt.

Diese Aufgabe ist durch die Merkmale des Patentanspruches 1 gelöst.

Erfindungsgemäß ist vorgesehen, dass der Magnet als geschlossener Ring ausgebildet ist und der eine Pol des Magneten nach außen und der andere Pol des Magneten nach innen weist, sowie das magnetosensitive Element im Zentrum des Ringes angeordnet ist. Dadurch lässt sich die Bauhöhe der gesamten Sensoranordnung wesentlich verringern, da das magnetosensitive Element nach wie vor in dem magnetflussfreien Bereich des Magneten angeordnet ist, allerdings nicht mehr, wie bei dem U-förmigen Magneten, auf dem Querschenkel aufliegt, sondern um zumindest diese Bauhöhe des Querschenkels reduziert ist. Das bedeutet je nach Bauhöhe des geschlossenen Rings des Magneten als auch des magnetosensitiven Elements, dass diese mit ihren Oberflächen gemeinsam nach oben und unten abschließen, so dass auch kein Freiraum in axialer Richtung nach oben oder unten zwischen dem magnetosensitiven Element und dem Magneten erforderlich ist. Ein weiterer Vorteil ist darin zu sehen, dass das Auslöseteil, welches relativ zu dem magnetosensitiven Element bewegbar ist, in einer Ebene oberhalb oder unterhalb des magnetosensitiven Elementes und des Magneten in jede beliebige Richtung bewegt werden kann, um ein Ausgangssignal des magnetosensitiven Elementes zu erzeugen, welches die aktuelle Stellung bzw. Bewegung des Auslöseteils relativ zu der Sensoranordnung kennzeichnet. Das heißt, dass man bei Ausgestaltung des Magneten als geschlossener Ring nicht mehr auf bevorzugte Bewegungsrichtungen angewiesen ist, so dass dadurch auch eine größere Freiheit bei der Unterbringung der Sensoranordnung an einem Bauteil gegeben ist.

Zur Realisierung einer Sensoranordnung ist weiterhin vorgesehen, dass der als geschlossener Ring ausgebildete Magnet und das magnetosensitive Element auf einer Platine angeordnet und befestigt sind. Die Platine kann beispielsweise Leiterbahnen und weitere elektronische Bauelemente aufweisen, die mit dem magnetosensitiven Element verbunden sind, um eine Signalaufbereitung oder eine Signalumwandlung durchführen zu können. Der ringförmige Magnet ist seinerseits ebenfalls auf der Platine angeordnet, und zwar derart, dass sich das magnetosensitive Element in dessen Zentrum befindet. Der ringförmige Magnet kann beispielsweise auf der Platine aufgeklebt oder in sonstiger geeigneter Weise befestigt werden. Die Ausgangssignale des magnetosensitiven Elementes und gegebenenfalls der auf der Platine angeordneten weiteren elektronischen Bauteile werden in bevorzugter Weiser über ein Kabel an eine nachgeschaltete Auswerteeinheit abgegeben. Über das Kabel kann auch eine Stromversorgung der Elemente, die auf der Platine angeordnet sind, erfolgen.

In Weiterbildung der Erfindung weist die Sensoranordnung ein Gehäuse aus einem spritzgegossenen Kunststoff auf. Dadurch wird es ermöglicht, dass die Sensoranordnung mit ihren empfindlichen Bauteilen, insbesondere dem magnetosensitiven Element, geschützt untergebracht und am gewünschten Bauort eingebaut werden kann. Alternativ dazu ist es denkbar, die beteiligen Bauelemente der Sensoranordnung an einem bewegbaren oder feststehenden Bauteil anzuordnen oder in diesem zu integrieren. Somit ist es denkbar, dass die in dem Gehäuse untergebrachte Sensoranordnung ihrerseits in ein Werkzeug eingelegt wird und zur Herstellung des fertigen Bauteiles mit Kunststoff umspritzt wird, so dass die Sensoranordnung in dem Bauteil bei dessen Herstellung integriert wird.

In einer weiteren Ausgestaltung der Erfindung ist vorgesehen, dass der Magnet ein Elektromagnet ist. Zunächst ist es denkbar, dass der Magnet als Dauermagnet aus an sich bekannten Werkstoffen besteht. Diese Werkstoffe können auch ein Kunststoff sein, der magnetisierbare Partikel umfasst und der in die gewünschte ringförmige Form mit dem erforderlichen Durchmesser gepresst wird. Daneben ist es weiterhin vorgesehen, dass der Magnet als Elektromagnet realisiert ist, bei dem auf einem ringförmigen Träger Wickeldrähte in Form einer Spule aufgebracht sind. Diese Ausführung bietet sich insbesondere dann an, wenn der Elektromagnet auf einer Platine angeordnet werden soll. Dann kann von außen über das Kabel die erforderliche Energieversorgung erfolgen und gleichzeitig über das Kabel die Signalabgabe der Sensoranordnung erfolgen.

Ein Prinzipbild einer erfindungsgemäßen Sensoranordnung ist in der der einzigen Figur dargestellt.

In der Figur 1 ist, soweit im Einzelnen dargestellt, mit der Bezugsziffer 1 die Sensoranordnung versehen, die eine als geschlossenen Ring ausgebildeten Magneten 2 aufweist. Im Zentrum des Ringes ist ein magnetosensitives Element 3, beispielsweise ein Hall-Sensor, angeordnet. Bei diesem Ausführungsbeispiel sind der Magnet 2 und das Element 3 auf einer Platine 4 angeordnet, wobei weitere elektronische Bauteile und ein Kabel vorhanden sein können, aber nicht gezeigt sind.

Der Magnet 2 ist beispielsweise auf der Oberfläche der Platine 4 aufgeklebt, während das magnetosensitive Element 3 mit nicht dargestellten Leiterbahnen der Platine 4 elektrisch kontaktiert ist. Zusätzlich kann daran gedacht werden, auch das magnetosensitive Element 3 auf der Oberfläche der Platine 4 aufzukleben.

Ein Auslöseteil, beispielsweise aus einem ferromagnetischen Werkstoff, wird in der Ebene oberhalb des Magneten 2 und des Elementes 3 (oder gegebenenfalls auch in einer Ebene unterhalb der Platine 4) bewegt, so dass dessen lineare oder rotatorische Bewegung von dem magnetosensitiven Element 3 erfasst und ein entsprechendes Signal abgegeben werden kann. Dieses Signal ist dann ein Maß dafür, inwieweit das nicht dargestellte Auslöseteil relativ zu der Sensoranordnung bewegt wird, oder in welcher Position es sich dazu befindet.

Bei dem Magnet 2, gemäß dem Ausführungsbeispiel, ist die Polarisierung derart, dass ein Südpol S nach außen und ein Nordpol N nach innen weist. Auch die umgekehrte Ausrichtung der Pole des Magneten 2 ist möglich. Durch diese Ausrichtung der Pole des Magneten 2 ergeben sich Magnetflusslinien zwischen Nordpol und Südpol, die bewirken, dass im Zentrum des ringförmigen Magneten 2 eine magnetflussfreie Zone herrscht, in der das magnetosensitive Element 3 angeordnet ist.

Eine bevorzugte Anwendung der erfindungsgemäßen Sensoranordnung 1 ist im Bereich der Fahrzeugtechnik, beispielsweise bei Personenkraftwagen oder Lastkraftwagen, zu sehen, bei denen Bauteile wie z.B. Türen, Heckklappen oder dergleichen bewegt werden und deren Stellung mit der erfindungsgemäßen Sensoranordnung 1 erfasst werden soll.

### Bezugszeichenliste

- 1.: Sensoranordnung
- 2.: Magnet
- 3.: magnetosensitives Element
- 4.: Platine

## Patentansprüche

1. Sensoranordnung (1) zur Messung linearer oder rotatorischer Bewegungen eines Bauteiles, wobei die Sensoranordnung (1) einen Magneten (2) sowie ein magnetosensitives Element (3) aufweist und das magnetosensitive Element (3) in einem magnetflussfreien Bereich des Magneten (2) angeordnet ist, **dadurch gekennzeichnet, dass** der Magnet (2) als geschlossener Ring ausgebildet ist und der eine Pol des Magneten (2) nach aussen und der andere Pol des Magneten (2) nach innen weist sowie das magnetosensitive Element (3) im Zentrum des Ringes angeordnet ist.

2. Sensoranordnung (1) nach Anspruch 1, **dadurch gekennzeichnet, dass** der Magnet (2) und das magnetosensitive Element (3) auf einer Platine (4) angeordnet und befestigt sind.

3. Sensoranordnung (1) nach Anspruch 1 oder 2, **dadurch gekennzeichnet, dass** die Sensoranordnung (1) ein Gehäuse aus einem spritzgegossenem Kunststoff aufweist.

4. Sensoranordnung (1) nach Anspruch 1, 2 oder 3, **dadurch gekennzeichnet, dass** der Magnet (2) ein Elektromagnet ist.

## Claims

1. Sensor array (1) for measuring linear or rotational movements of a component, the sensor array (1) having a magnet (2) and a magneto-sensitive element (3) and the magneto-sensitive element (3) being arranged in a magnetic flux-free region of the magnet (2), **characterized in that** the magnet (2) is formed as a closed ring and one pole of the magnet (2) faces outwards and the other pole of the magnet (2) faces inwards and the magneto-sensitive element (3) is arranged in the centre of the ring.

2. Sensor array (1) according to Claim 1, **characterized in that** the magnet (2) and the magneto-sensitive element (3) are arranged and attached on a printed circuit board (4).

3. Sensor array (1) according to Claim 1 or 2, **characterized in that** the sensor array (1) has a housing made of an injection-moulded plastic.

4. Sensor array (1) according to Claim 1, 2 or 3, **characterized in that** the magnet (2) is an electromagnet.

## Revendications

1. Ensemble de capteur (1) destiné à mesurer des déplacements linéaires ou rotatifs d'un composant, l'ensemble de capteur (1) présentant un aimant (2) ainsi qu'un élément magnétosensible (3), l'élément magnétosensible (3) étant disposé dans une partie de l'élément (2) exempte de flux magnétique,
**caractérisé en ce que**
l'aimant (2) est configuré comme anneau fermé, l'un des pôles de l'aimant (2) est orienté vers l'extérieur et l'autre pôle de l'aimant (2) vers l'intérieur, l'élément magnétosensible (3) étant disposé au centre de l'anneau.

2. Ensemble de capteur (1) selon la revendication 1, **caractérisé en ce que** l'aimant (2) et l'élément magnétosensible (3) sont disposés et fixés sur une carte de circuit (4).

3. Ensemble de capteur (1) selon les revendications 1 ou 2, **caractérisé en ce que** l'ensemble de capteur (1) présente un boîtier en matière synthétique moulé par injection.

4. Ensemble de capteur (1) selon les revendications 1, 2 ou 3, **caractérisé en ce que** l'aimant (2) est un électroaimant.
